# EUROPEAN PATENT SPECIFICATION

(11) **EP 0 484 806 B1**
(45) Date of publication and mention of the grant of the patent: **06.08.1997**
(21) Application number: 91118466.1
(22) Date of filing: 30.10.1991
(51) Int. Cl.: H04N 7/087, H04N 7/00

(54) **Transmission and/or reception system of data for personal computers**
System zur Übertragung und/oder zum Empfang von Daten für einen Personalcomputer
Système de transmission et/ou de réception de données pour ordinateur personnel

(30) Priority: 07.11.1990 IT 6787390
(43) Date of publication of application: 13.05.1992
(60) Divisional application: 95119978.5
(73) Proprietor: RAI RADIOTELEVISIONE ITALIANA S.p.A., 00195 Roma (IT); SELECO S.p.A., I-33170 Pordenone (IT)
(72) Inventor: d'Amato, Paolo, Ing., I-00195 Roma (IT); Poletto, Maurizio, Dr., I-30030 Oriago (VE) (IT)
(74) Representative: Dini, Roberto, Dr. Ing.

(56) References cited:
- EP-A- 0 306 208

## Description

### General

The present invention relates to a transmission and/or reception system of data for personal computers, by means of circular diffusion of radioelectric signals, carried out in teletext settings, in which the data is gathered in files and groups and transmitted according to a telesoftware transmission procedure, comprising a configuration page.

By the term 'file' we mean a data block, for example constituting a computer program, or used as input from a computer program, or representing a written text or illustration.

A system of the type indicated has been described in the European patent application N°0 306 208.

The principle aim of the present invention is to indicate an improved data transmission system for personal computers of the type described, that facilitates the selection of the files desired by the user. To allow for such aims the present invention has as its object a transmission and/or reception system of data for personal computers, by means of circular diffusion of radioelectric signals, carried out in teletext settings, in which the data is gathered in files and groups and transmitted according to a telesoftware transmission procedure, comprising a configuration page; the characterising principle of the invention consists in the fact that the files are divided into groups and that said configuration page contains information that allows the receiving terminal to construct a general index or master directory after having automatically acquired said configuration page.

A second important characteristic of the invention consists in the fact that the headings of the files of each group are concentrated in the first page of the group itself so as that when the user selects a group, the terminal automatically acquires such page and displays on the screen the group directory.

Infact the system according to the invention provides for the data transmitted to be organised according to a structure of two levels, groups and files; a master directory is also provided for along with a group directory.

With this aim in mind, the system according to the invention also provides for the possibility of defining selective links between the files, so as to facilitate the selection and acquisition of data.

The present invention has a further aim of taking full advantage of the channel in use. To allow for such aims, the present invention also has as its object a transmission and/or reception system of data for personal computers, by means of circular diffusion of radioelectric signals, carried out in teletext settings, in which the data is gathered in files that are transmitted according to telesoftware transmission system, characterised by the fact that the possibility of defining a compacting system of the data contained in the files is provided for.

Further aims and advantages of the present invention will become clear from the following detailed description and annexed drawings, supplied as a non limiting example, in which:

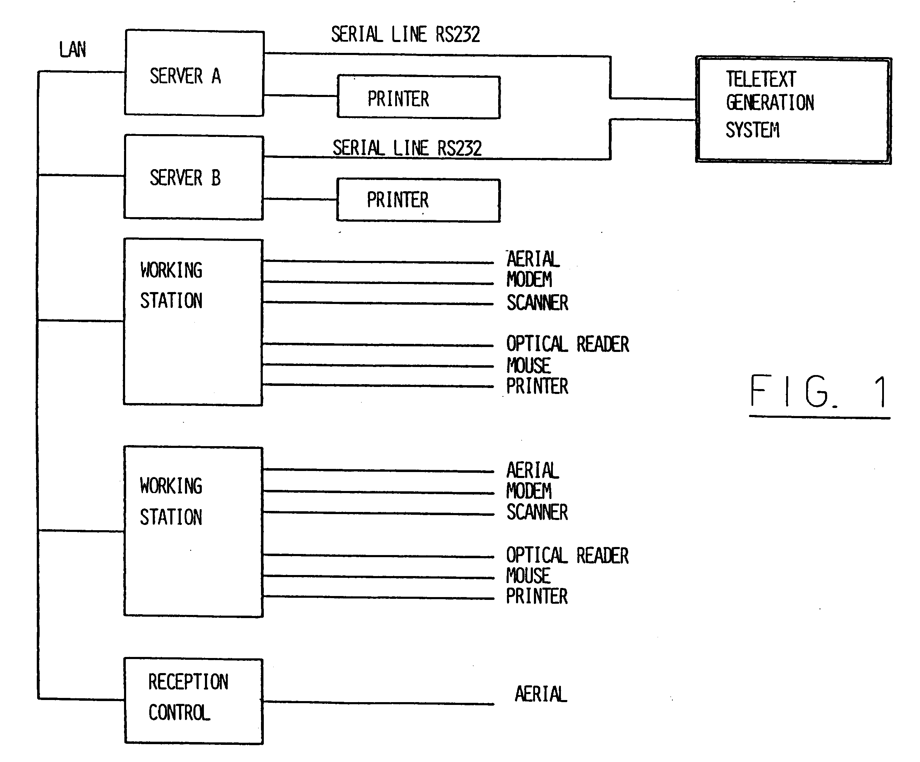

Figure 1 schematically represents the configuration of the system implementing a regular data transmission service according to the invention;
Figure 2 represents the block diagram of an interface board that permits a personal computer to directly receive the telesoftware.

The protocol of transmission relative to the present invention will now be described in more detail.

### Detailed description

The protocol of data transmission maintains the same transmission unit (line) and the same structure with regards the pages of the teletext system, used by the Televideo service by the RAI (Radiotelevisione italiana).

The line 0 is not utilized by telesoftware; all of the information is present from line 1 through to line 23. The difference between Televideo and telesoftware lies in the type of information inserted in each single page:
- the information contained in a Televideo page is immediately visable on the television screen;
- the information contained in a telesoftware page cannot be immediately utilized, but requires a series of elaborations.

The difference between the pages of teletext and those of telesoftware is that telesoftware pages contain characters of 8 bit without parity: it is therefore possible to transmit both ASCII files and binary files.

The protocol according to the invention does not provide for a corrisponding biunivocal file-folder, therefore it is possibile to transmit more short files in the same folder, or divide a long file into several folders. This latter possibility is of interest in that the actual integrated teletext decoding circuits allow for the simultaneous search and acquisition of four folders; in taking advantage of this possibility it is possible to reduce to a quarter the time needed necessary for the reception of a file.

The protocol according to the invention provides for two levels of protection of data with regards reception errors. With the lower level of protection, a CRC (cyclic redundance check) is present in lines 1 through to 23 occupying the last two characters and is utilized in reception for identifying errors; if the control is positive the line is validated, otherwise the terminal awaits the successive transmission of the same page and acquires a second time the lines not being valid.

The protective strategy based on the line CRC has shown itself to be sufficient regarding practical objectives; however the protocol also provides for the possibility of a higher level of protection, so as to assure a good reception even in critical conditions (the probability of 99% of good reception in the first acquisition with error odds being 10-4); for achieving such results the Hamming codes are used along with the line CRC.

More precisely, each telesoftware line of 40 bytes is divided into 8 code blocks of 5 bytes each; each code block is made up of 4 useful bytes, by 6 bits of Hamming redundance and by 2 CRC bits; even the CRC bits result in being protected by the Hamming code, that is a shortened code (40, 34).

As errors in reception may be caused by intersymbolic interference, some bit configurations can result in being particularly critical; so as to avoid this the protocol provides for the possibility of masking the data, that is to carry out the exclusive OR of the data itself with a fixed pseudocasual sequence, that is repeated line by line. This operation, that is carried out on the lines already confectioned, i.e. after the addition of the CRC and the eventual Hamming code, having the effect of destroying the critical sequence, but can, obviously, introduce critical sequences in other positions, therefore the results are effective only if the data is transmitted once masked, once not, or alternatively masked with two different sequences. It is however necessary to introduce in every subpage a byte that identifies the masking pseudocasual sequence, this byte is inserted in the so called 'page heading', transmitted in line 1.

The difference with the known protocol is that the new protocol provides for the transmission of information which allows the receiving terminal to automatically produce directories; the index system is of two levels: the files are divided into groups, each of which has its index (group directory); at the higher level the master directory is found. The files contained in a determined group must have similar characteristics, i.e. they must be of the same type (binary or ASCII), for the same operating system and with the same level of protection (only CRC or Hamming + CRC).

The information relative to the master index is contained in the so called configuration page, that is transmitted every cycle; according to the number of groups, the configuration page may be a static one, or a folder of two or more subpages. The telesoftware terminals upon turning on, automatically acquire the page or folder of configuration and, based on the relative information contained, produce the master directory on the screen. At this point the user must select the group of interest, for example moving the cursor to the relative section of the main index. Each group occupies several consecutive folders; the first page of every group can be, according to neccesity, a static one, or a folder, containg all the headings of the files that make up the group. When the user has selectioned a group, the terminal automatically acquires the first page of the group and generates, based on the relative information contained within, the group index. At this point the user can select the file or files that are of interest, for example by moving the cursor along the index and giving the relative acquirement command.

All the telesoftware pages (configuration page, group index page, or normal pages containing data) begin with the page heading, immediately followed by the useful data block.

### Configuration page

This page contains, apart from the information relative to the main index, other important service information.

It is assumed that, for each operative system, a software is realised that manages the reception based on the protocol according to the invention. This software may receive updating, be it for the addition of new functions or for the correction of errors found in the previous versions. The most elegant method of introducing to the receiving terminals a new version of the software is to transmit it via telesoftware, inserting it into one of the groups in transmission; the configuration page contains information, based on which every receiving terminal must, upon turning on, automatically program the acquisition of an eventual version of software received relative to its operative system and more recent than that contained in itself. Considering the present systematic use of compacting algorithms, an analogous mechanism for the automatic signalling of eventual new versions of the software decompacting, transmitted to allow for an automatic downloading to the receiving terminals.

In conclusion, the configuration page contains, apart from its heading, three types of information: group specifics, the specifics relative to the protocol exchange (an abbreviation which means the specifics relative to the change of the receiving software that implements the protocol), and the specifics of the decompacting software exchange; given the importance of the information contained, the configuration page is always transmitted with the higher level of protection (Hamming + CRC).

The heading contains:
- a byte that determines the presence, or not of masking;
- a rolling index n/m (2 bytes, that allow for the definition in binary code a folder with a maximum of 255 subpages; in reality the configuration page is almost always static, hence with an index 0/0;
- the so called 'data of transmission close (a byte, the significance of which will be discussed further on);
- a byte that indicates, in binary, the specific number of protocol change;
- a byte that indicates, in binary, the specific number of decompacting algorithm.

The heading is followed by the group specifics, that are organised as follows:
- progressive number, that identifies the group (a byte in binary code);
- esadecimal address (2 bytes) from the first page of the group, containing, as mentioned, the information for the group directory;
- escadecimal address (2 bytes) from the last page of the group;
- a byte that indicates the groups characteristics (whether the group name must be visualised in a fixed way or flashing, whether the group's files are binary or of the text type, whether the level of protection is high or low);
- the type of operative system (one byte);
- current version of the decompacting software (a byte in binary);
- name of the group to be viewed on the screen (18 bytes ASCII).

The group specifications are followed by the change specifications, constituted as follows:
- type of operative system (one byte);
- version number (one byte);
- number of group where a file is present (one byte);
- number of file inside the group (one byte).

The change of decompacting algorithm specifications, that follow the protocol change specifications are organized in the same manner, except for the fact that in place of the byte that defines the operative system the byte that defines the type of algorithm is transmitted.

### Group first page

The heading of the first page of the group is constituted as follows:
- masking (one byte)
- rolling index n/m (two bytes in binary code; this page is also usually static, but can become a folder if the group contains a number of files);
- data of transmission close (one byte, see below);
- number of file headings (one byte in binary).

The page heading is followed by the file headings contained in the group, that are constituted as follows:
- progressive file number (one byte in binary);
- name of file (16 bytes ASCII);
- composition file data (2 bytes, with DOS notation);
- dimension of the file (3 bytes in binary);
- miscellany (one byte);
- password (6 bytes ASCII);
- link (one byte in binary);
- number of folders in which the file is divided (one byte in binary);
- a group of four bytes for each folder used, that indicate in the order: folder address (2 esadecimal bytes); the numbers of the first and the last subpage composing the file in object (2 bytes in binary).

Some of the specifications mentioned require several words of comment. The name of the file is that with which the file itself will be saved, and also comprises the extension; the string begins with a byte indicating the number of characters utilized, for a maximum of 15 characters.

The byte relative to miscellany a bit that indicates whether the name of the file has been compacted or not, a bit that indicates whether the name of the file is to be viewed in a fixed manner or flashing, an autosave bit and an autorun bit; the other bits are reserved for future applications.

The password can be constituted by six spaces: this means that the file is receivable by everyone; on the contrary the filed is destined to users that know the password.

Link: an important characteristic of the new protocol is the possibility of defining a packet of files that have to be received jointly. Only files of the same group can be joint together; in practice, the link byte is the identifying number of the file that constitutes the successive ring of the chain; the last file of the chain points towards the first. To receive the complete packet it is necessary to simply ask for the acquisition of any file of the chain; obviously the files that do not take part of a packet point to themselves.

### Data pages

These are normally subpages, containing a data block belonging to a file. Even if the same folder may contain more files, it is agreed upon for simplicity sake that the data of two different files can not coexist in the same subpage. Consequently, the last subpage of a file will contain, generally, stuffing bytes, that are spaces. Such bytes are identifyable by the receiving software by a simple calculation, in that the file heading indicates its length, and every subpage contains a fixed number of bytes, having the page heading of a fixed length. Precisely, if the high level of protection is applied, 32 x 23 bytes are available in every page, from which it is necessary to deduct the 6 bytes of the heading, for a total of 730; with the lower level of protection the useful bytes become 38 x 23 - 6=868.

The structure of the page heading is the following:
- masking (one byte);
- rolling index (2 bytes in binary);
- data of transmission finish (see below);
- block index i/k (2 bytes).

It is to be noted that the block index consists of a progressive numeration of the blocks from which the file is divided, even belonging to different folders, and this is an aid for the receiving software in the phase of reconstructing the files. In the particular case in which a file is transmitted in a sole folder, evedently the rolling index and the block index coincide.

### Data of transmission close

In the heading of all the pages a byte has been introduced, called transmission close, the utility of which is apparent when changes in the transmission are carried out during the day. If a file is cancelled or substituted with another, the terminals that were acquiring it may behave in an abnormal manner if the alteration is not appropriately pointed out; moreover, the user may have problems in understanding the reasons of the abnormality.

To resolve this problem the following strategy has been adopted. The flag of transmission close, contained in the configuration page is raised a determined time, let us say x minutes (typically quarter of an hour), before a change that involves the main index. Similarly, the flag contained in the first page of a determined group is raised x minutes before a change involving that determined group. These flags are then reset once the changes have occured.

The receiving software can take advantage of these flags for installing in the indexes, subject to change, a notice that warns the user to pay attention; if the user, after having referred to an index containing the notice, decides to attempt, all the same, to acquire a file, is aware of the fact that the acquisition may not be carried through.

The flags contained in the subpages of the files allow for the evaluation of the validity of an acquisition; such flags have a different kind of management, that of the flip-flop kind, and therefore must have the same value in all the subpages of a determined file. If after a while, subpages with opposite flags are received, this means that the file being acquired has been substituted by a new one and therefore the acquisition is not valid.

A different strategy could also be used; for example, the total number of programs available via telesoftware could be distinguished on the basis of the contents heading transmitted only in certain hours of the day. The Televideo pages, that describe the telesoftware service, would supply all the information relative to the said contents heading; it would be possible, when desired, to add to the file heading the hour in which transmissions start and finish, something that would render useless the change signalling mechanism previously described. This and other modifications can be provided at any moment, taking advantage of the software's reception downloading mechanism previously described.

### Particular

Several particulars of the new described protocol are herein emphasized:
- the possibility of sending updates of the protocol itself;
- the possibility of compacting the files, with the aims of optimizing the exploitation of the transmission channel;
- the possibility of defining the compacting algorithm;
- the possibility of defining links between the files, so as to allow the terminals automatic acquisition of a packet of linked files;
- the possibility of the configuration page containing data allowing the terminal to automatically generate the main index;
- the fact that the headings of the files of each group are concentrated on the first page of the group itself; upon selection of a group by the user, the terminal automatically acquires the first page and presents the group index on the screen;
- having concentrated all the file headings on the first page of each group simplifies the structure of the subpages of the folders containing the files;
- with the aims of introducing a further simplification, each subpage contains data referring to one file only, even in the case in which a folder contains a number of files; since the page heading is of a fixed length, length of the data zone is fixed, for which the division of files into blocks (each being allocated in a subpage) results in being much easier and, above all, independantly from the way in which the file is transmitted (by itself in a single folder, along with other files in a single folder, or distributed in a number of folders);
- on the configuration page, on the first page of each group and on every subpage of the folders containing files, transmission closing flags have been introduced; this allows the possibility of changing the files transmitted during the day without disturbing the functioning of the receiving terminals.

### Transmission

So as to provide a better comprehension of the invention, the configuration proposed for the preparation and transmission of a regular telesoftware service as according to the invention, will be described with the help of the drawing, underlining the fact that an example is simply being dealt with and that, consequently, other configuration apparatus may be used.

The enclosed figure represents a semplified block drawing of the system, constituted by a local area network (LAN) of personal computers, having the following functions:
- A pair of computers (computer direction) are used for the transmission, also acting as servers, i.e. managing the mass support utilised also by the other computers of the network. Such a pair of computers are connected to the teletext generating system.
- Other computers (work stations) are utilised by computer programmers for preparing files, or by the system manager for defining the total number of programs available and activating the transmission through commands communicated to the computer direction.
- A computer for verifying the transmission.

The two PC servers A and B are indicared in the figure, furnished with a serial line RS 232 for the connection with the central computer that manages the teletext service. One of the two "master" is usually working "master", whilst the other constitutes the "slave" or back up, and shall be of the "lot" type, i.e. comprising a watch dog automatic commutation circuit for identifying breakdowns.

The work stations may be of a variable number, with regards to the activity caried out (two of which being indicated in the figure).

The work stations, user/manager, are utilised, as said, by computer programmers for the preparation and verifying of the files, and by the system manager for the definition of the total number of programs available; therefore it must be possible, from such work stations, to transmit files and transmission instructions towards the file server. It is considered to be of use the separation of the two functions "user" and "system manager" by means of appropriate passwords. Apart from the password it is also considered useful the introduction of user identification.

The work stations shall have many peripherals, so as to allow the computer programmers the acquisition of various data. In paticular, it is considered to be of use a scanner for the acquisition of graphics, an optical reader for the acquisition of written text and an optical disc. It is also advisable the connection, via the telephone network or ITAPAC, with external data banks (here a modem is necessary).

Connected by means of LAN to the computers of the network a reception device is provided for verifying the files transmitted. Such a device is indicated in the figure as the reception control, and is constituted of a computer supplied with telesoftware interface with video input in high and low frequency; it receives from the PC server of computer direction the information relative to the files in transmission; it comprises a software that automatically manages the reception of said files and sends them to the computers of the computer direction: these, in abnormal cases, for example a non perfect coincidence of a file in transmission with that memorised in the server, sends messages of advice, of errors, and of alarm to predisposed suitable devices.

A MAIN program is run on the computers of the computer direction, which coordinates the realisation of the total number of programs available, managing numerous automatic functions.

Such functions, for example can be the following:
- Compilation of the configuration page.
- Compilation of the pages of the groups: transforms all the files belonging to a data group into telesoftware pages, composes the first page, containing the file headings of the group.
- Transfers all the telesoftware pages composed in the teletext generation system.
- Controls reception: sends instructions to a suitable PC and compares files received with the original ones.
- Manages an historic file of the files in transmission.

The manual functions can be however the following:
- Acquisition of user files, along with relative heading parameters and insertion in a suitable library (source library).
- Consultation of the source library:
- Compilation of the total number of programs available (definition of all the operations to be carried out in the various sessions of transmission).
- Consultation of the historic file.
- Management of the password list.
- Procedure of manual transmission (to be used in cases of emergency, in cases where the automatic procedure does not work).

### Reception

The domestic receiving part of the system will now be described. The receiving terminal can consist of a television set comprising a suitable data output serial port that permits the connection with a personal computer; or, preferably, the terminal can consist of a personal computer or a home computer, comprising a suitable circuit board allowing for the direct reception of the telesoftware.

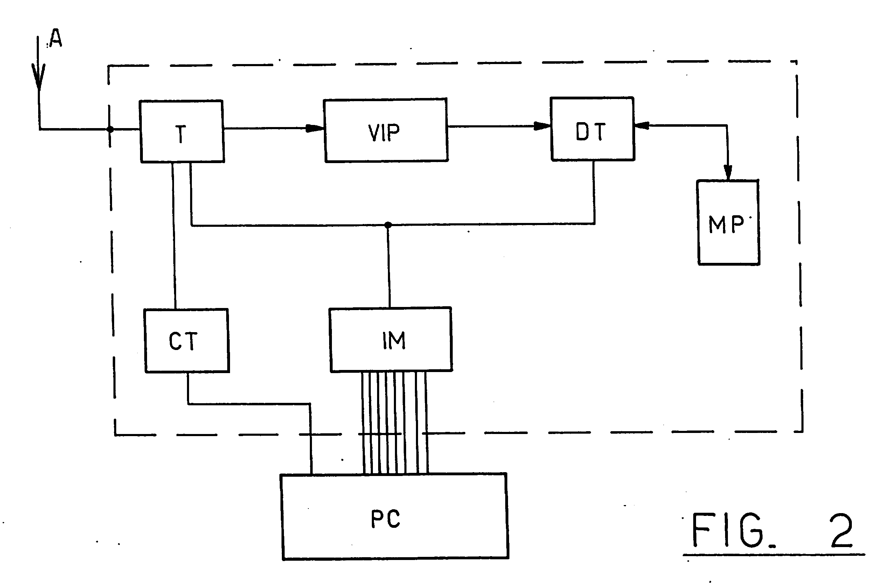

Figure 2 represents a block drawing of a realisable example of said circuit board.

In the figure the letter A indicates a television receiving antenna; the television signals intercepted by this are passed to a tuner (T), of a conventional type, for example a synthesizer frequency tuner, that allows for the tuning of television channels from both the VHF range and the UHF range.

The tuner also comprises an amplifying circuit of intermediate frequency and a video detector, according to recent television technology; the tuner supplies in output a base band video signal, relative to the tuned channel; such signal reaches the video input processor, that provides for, in a known way, the extraction of the teletext data associated to the received television program from the video signal.

Said teletext data reach the teletext decoder (DT), that decodes the signals received, composes the teletext pages according to commands received (see following), and is able to memorise up to four pages in the page memory (MP).

The decoder comprises 4 reception banks, completely separated and independant; it is therefore possible to receive up to 4 teletext pages simultaneously, taking full advantage of the above described characteristics relative to the protocol according to the invention; the recption process is greatly improved so as to obtain the maximum reception speed.

The commands reaching the decoder DT from the principle microprocessor of the personal computer (PC), through an interface (IM), that provides for the conversion of logic signals coming from the parallel port of the personal computer to serial signals, that, through the internal serial bus of the circuit board (IB), control the tuner T and the decoder DT.

In this way the personal computer can manage the functioning of the circuit board's two components, and is able to analyse, by means of the decoder itself, the data contained in the memory MP.

The block designated CT represents a voltage convertor, that adapts the input voltage, available on the slot of the computer, to the needs of the tuner T.

Clearly the software of the personal computer must comprise an initial program, according to the protocol described above, to which the telesoftware will be implemented, so as to acquire, by means of the circuit board in figure 2, the telesoftware that manages the data received, of which, every terminal must, upon turning on, automatically program the acquisition, if the version in possession precedes the version in transmission; naturally the above is also valid for the eventual acquisition of new versions of decompacting software.

According to the above, the computer will be able to visualise on the screen of the relative monitor the main index of the telesoftware transmitted, and, as soon as the user has selected the group of interest, for example moving the cursor to the section of the main index, the index group chosen, the user at this point can select the file or files that he considers interesting, for example moving the cursor along the index and giving the relative acquisition command, so as that the subpages contained in that file or files are transferred, from the memory MP of the circuit board, to the computer's main memory. The reconstruction of the files, obtained composing the various blocks transmitted on the subpages, occurs inside the personal computer.

The characteristics of the system described become clear from the present description. The inherent advantages of the system object of the present invention also become clear.

It is clear that numerous variants, to the system described as an example, are possible by the man of the art, without however departing from the novelty principles inherent to the invention.

## Claims

1. Transmission and/or reception method of data for personal computers, by means of circular diffusion of radioelectric signals, carried out in teletext settings, in which the data is gathered in files and groups and transmitted according to a telesoftware transmission procedure, comprising a configuration page characterised by the fact that the files are divided into groups and that said configuration page contains information that allows the receiving terminal to construct a general index or master directory after having automatically acquired said configuration page.

2. Transmission and/or reception method of data for personal computers, according to claim 1, characterised by the fact that said configuration page also contains, for every group, the name of the group and, if that is the case, the methods of visualisation of the groups name.

3. Transmission and/or reception method of data for personal computers, according to claim 1, characterised by the fact that the headings of the files of each group are concentrated on the first page of the group itself so as that when a group is selected by the user, the terminal automatically acquires such page and presents the group directory on the screen.

4. Transmission and/or reception method of data for personal computers, according to claim 3, characterised by the fact that the first page of every group also contains, for every file, the progressive file identification number, the name of the file, the file's dimensions, the number of folders in which the file is divided and the address of all of said folders.

5. Transmission and/or reception method of data for personal computers, according to claim 4, characterised by the fact that the first page of every group also contains, for every file, the indication of other characteristics of the file, such as its protective password, a link data (number of the file following the one in question), the composition date of the file, the method of visualising the name of the file and, if that is the case, the compacting algorithm of the file.

6. Transmission and/or reception method of data for personal computers, according to one or more of the previous claims, characterised by the fact that the possibility of defining links between the files is provided for, so as to allow the receiving terminals the automatic acquisition of a packet of files linked between themselves.

7. Transmission and/or reception method of data for personal computers, according to one or more of the previous claims, characterised by the fact that the configuration page also contains information that permits the receiving terminal automatic acquisition of new versions of reception software.

8. Transmission and/or reception method of data for personal computers, according to one or more of the previous claims, characterised by the fact that each subpage contains data belonging to a single file, even in the case where a folder contains a number of files, so as the heading of the subpage is of a fixed length.

9. Transmission and/or reception method of data for personal computers, according to one or more of the previous claims, characterised by the fact that on the configuration page, on the first page of every group and on all the subpages of the folders containing files, transmission closing flags are introduced.

10. Transmission and/or reception method of data for personal computers, according to claim 9, characterised by the fact that the flags of the configuration page and of the first pages of the groups are raised a given time before the forecasted change and reset after the change has been carried out.

11. Transmission and/or reception method of data for personal computers, according to claim 10, characterised by the fact that on the directories, presented to the user, appears a notice that a change will shortly occur when said flags are raised.

12. Transmission and/or reception method of data for personal computers, according to claim 11, characterised by the fact that if the user decides to attempt the acquisition all the same, the flags present on the subpages contained in the required file allow to control the validity of the acquisition itself.

13. Apparatus for the transmission of data for personal computers according to the method of one or more of the preceding claims, by means of circular diffusion of radioelectric signals, carried out in teletext settings, in which the data is gathered in files and groups and transmitted according to a telesoftware procedure, said apparatus comprising a plurality of computers connected together and to a teletext signal generating system, to a mass memory device and to a reception device for verifying the transmission, characterised by the fact that there is provided a main program, which is run on the computers, and which provides for:
- the compilation of the configuration page,
- transforming all the files belonging to a data group into telesoftware pages,
- composing the first page, containing the file heading of the group,
- transferring all the telesoftware pages composed in the teletext generation system, and
- controlling the reception comparing the files received with the original ones.

14. Apparatus for the reception of data for personal computers according to the method of one or more of the preceding claims, wherein the data is transmitted by means of circular diffusion of radioelectric signals, carried out in teletext settings, in which the data is gathered in files and groups and transmitted according to a telesoftware procedure, said apparatus comprising a television signal receiver, a teletext signal decoder and one or more personal computers, characterised by the fact that there is provided a program for acquiring the information contained in the configuration page and accordingly construct and, if that is the case, display on the screen a general index of the transmitted files.

## Patentansprüche

1. Verfahren zum-Übertragen und / oder Empfangen von Daten für Personalcomputers mittels zyklischer Übertragung in Teletextform ausgeführter Funksignale, bei denen Daten in Dateien und Gruppen gesammelt und nach einem Telesoftware-Übertragungsverfahren übertragen werden, die eine Konfigurationsseite umfassen, dadurch gekennzeichnet, daß sich Dateien in Gruppen teilen und die obergenannte Konfigurationsseite enthält Information, die dem Empfangsterminal erlaubt, einen allegemeinen Index oder ein Grundverzeichnis zu konstruieren, nachdem die obengenannte Konfigurationsseite automatisch erfaßt worden ist.

2. Verfahren zum Übertragen und / oder Empfangen von Daten für Personalcomputers nach Anspruch 1, dadurch gekennzeichnet, daß die obengenannte Konfigurationsseite für jede Gruppe auch den Gruppennamen enthält und, wenn das der Fall ist, die Anzeigenverfahren des Gruppennamens.

3. Verfahren zum Übertragen und / oder Empfangen von Daten für Personalcomputers nach Anspruch 1, dadurch gekennzeichnet, daß die Dateienüberschriften jeder Gruppe auf der ersten Seiten derselben Gruppe so versammelt sind, daß, falls eine Gruppe vom Benutzer ausgewählt wird, das Terminal automatisch solche Seite erfaßt und, stellt das Gruppenverzeichnis auf dem Bildschirm dar.

4. Verfahren zum Übertragen und / oder Empfangen von Daten für Personalcomputers nach Anspruch 3, dadurch gekennzeichnet, daß die erste Seite jeder Gruppe für jede Datei auch die progressive Dateienidentifikationsnummer enthält, den Dateiennamen, die Dateiengröße, die Anzahl der Dossiers, worin die Datei geteilt ist, und die Adresse aller obengenannten Dossiers.

5. Verfahren zum Übertragen und / oder Empfangen von Daten für Personalcomputers nach Anspruch 4, dadurch gekennzeichnet, daß die erste Seite jeder Gruppe für jede Datei auch den Hinweis auf andere Kennzeichnungen der Datei enthält, wie ihre Schutzlosungswort, die Verbindungsdaten (Anzahl von dem betreffenden folgenden Dateien), das Satzdatum, das Verfahren zum Anzeigen des Dateiennamens und, wenn das der Fall ist, das Dateienkompressionsalgorithmus.

6. Verfahren zum Übertragen und / oder Empfangen von Daten für Personalcomputers nach einem oder mehreren der vorangehenden Ansprüche, dadurch gekennzeichnet, daß es die Möglichkeit besteht, Verbindungen zwischen den Dateien so zu definieren, daß man dem Empfangterminal die automatische Erfassung eines Pakets von untereinanderverbindeten Dateien erlaubt.

7. Verfahren zum Übertragen und / oder Empfangen von Daten für Personalcomputers nach einem oder mehreren der vorangehenden Ansprüche, dadurch gekennzeichnet, daß die obengenannte Konfigurationsseite auch Information enthält, die dem Empfangterminal erlaubt, die neuen Versionen des Empfangssoftware zu empfangen.

8. Verfahren zum Übertragen und / oder Empfangen von Daten für Personalcomputers nach einem oder mehreren der vorangehenden Ansprüche, dadurch gekennzeichnet, daß jede Unterseite einzelner Datei gehörenden Daten enthält, auch wenn ein Dossier eine Anzahl von Dateien enthält, so daß die Überschrift jeder Unterseite eine bestimmte Länge hat.

9. Verfahren zum Übertragen und / oder Empfangen von Daten für Personalcomputers nach einem oder mehreren der vorangehenden Ansprüche, dadurch gekennzeichnet, daß auf der Konfigurationsseite, auf der ersten Seite jeder Gruppe und auf allen Unterseiten jedes Dateien enthaltenden Dossiers, Flags des Übertragungsendes eingeführt werden.

10. Verfahren zum Übertragen und / oder Empfangen von Daten für Personalcomputers nach Anspruch 9, dadurch gekennzeichnet, daß die Flags der Konfigurationsseite und der ersten Seiten der Gruppen eine bestimmte Zeit vor der vorgesehenen Veränderung aktiviert werden und, nachdem die Veränderung durchgeführt worden ist, entaktiviert.

11. Verfahren zum Übertragen und / oder Empfangen von Daten für Personalcomputers nach Anspruch 10, dadurch gekennzeichnet, daß auf den dem Benutzer dargestellten Verzeichnissen einen Hinweis erscheint, daß bald eine Veränderung vorkommt, sobald die obengenannten Flags aktiviert werden.

12. Verfahren zum Übertragen und / oder Empfangen von Daten für Personalcomputers nach Anspruch 11, dadurch gekennzeichnet, daß, falls der Benutzer immerhin die Erfassung zu versuchen beschließt, die vorhandenen auf den Unterseiten in der gewünschten Datei enthaltenen Anzeigen erlauben, die Gültigkeit der Erfassung selbst zu kontrollieren.

13. Einrichtung zum Übertragen von Daten für Personalcomputers nach einem oder mehreren der vorangehenden Ansprüche, mittels zyklischer Übertragung in Teletextform ausgeführter Funksignale, bei denen Daten in Dateien und Gruppen gesammelt und nach einem Telesoftware-Übertragungsverfahren übertragen werden, wobei die Einrichtung umfaßt eine Mehrzahl von zusammen- und einem Teletextsignalen erzeugenden System, einer Massenspeicher-Einrichtung und einem Empfangseinrichtung zur Kontrolle der Übertragung verbundenen Computers, dadurch gekennzeichnet, daß ein auf einem Computer läufendes Hauptprogramm vorgesehen ist, das
- die Kompilation der Konfigurationsseite,
- die Umwandlung aller einer Datengruppe gehörenden Dateien in Telesoftware Seiten,
- die Komposition der ersten Gruppendateiüberschrift enthaltenden Seite,
- den Transfer aller in Teletext erzeugendes System zusammengestellten Telesoftware Seiten,
- die Kontrolle des Empfangs, der empfangene Dateien mit den ursprünglichen verglicht,
vorsieht.

14. Einrichtung zum Empfangen von Daten für Personalcomputers, nach einem oder mehreren der vorangehenden Ansprüche, wobei die Daten mittels zyklischer Übertragung in Teletextform ausgeführter Funksignale, bei denen Daten in Dateien und Gruppen gesammelt und nach einem Telesoftware-Übertragungsverfahren übertragen werden, die einen Fernsehsignalempfänger, einen Teletextsignaldecoder und einen oder mehreren Personalcomputers umfaßt, dadurch gekennzeichnet, daß ein Programm zur Erfassung der in der Konfigurationsseite enthaltenen Information vorgesehen ist, welches infolgedessen baut und, wenn das der Fall ist, zeigt auf dem Bildschirm einen allgemeinen Index der übertragenen Dateien an.

## Revendications

1. Procédé de transmission et / ou réception de données pour ordinateurs personnels, au moyen de la diffusion circulaire de signaux radioélectriques réalisés en format télétexte, dans lesquels les données sont rassemblées en fichiers et groupes et transmises selon un procédé de transmission télésoftware, comprenant une page de configuration, caractérisé en ce que les fichiers sont divisés en groupes et que cette page de configuration contient de l'information permettant au terminal de réception de construire un tableau général ou répertoire d'exploitation après avoir automatiquement saisi cette page de configuration.

2. Procédé de transmission et / ou réception de données pour ordinateurs personnels selon la revendication 1, caractérisé en ce que cette page de configuration contient aussi, pour chaque groupe, le nom du groupe et, si c'est le cas, les procédés de visualisation du nom des groupes.

3. Procédé de transmission et / ou réception de données pour ordinateurs personnels selon la revendication 1, caractérisé en ce que les en-têtes des fichiers de chaque groupe sont concentrés sur la première page du groupe même de telle manière que, lorsqu'un groupe est sélectionné par l'utilisateur, le terminal saisit automatiquement cette page et présente sur l'écran le répertoire du groupe.

4. Procédé de transmission et / ou réception de données pour ordinateurs personnels selon la revendication 3, caractérisé en ce que la première page de chaque groupe contient aussi, pour chaque fichier, le numéro progressif d'identification du fichier, le nom du fichier, la taille du fichier, le nombre de dossiers dans lesquels le fichier est divisé et l'adresse de tous ces dossiers.

5. Procédé de transmission et / ou réception de données pour ordinateurs personnels selon la revendication 4, caractérisé en ce que la première page de chaque groupe contient aussi, pour chaque fichier, l'indication d'autres caractéristiques du fichier, comme un mot de passe de protection, une donnée de liaison (nombre de fichiers suivant celui en question), la date de composition du fichier, le procédé de visualisation du nom du fichier et, si c'est le cas, l'algorithme de compression du fichier.

6. Procédé de transmission et / ou réception de données pour ordinateurs personnels, selon l'une ou plusieurs des revendications précédentes, caractérisé en ce que est envisagée la possibilité de définir des liaisons entre les fichiers, de manière à permettre aux terminaux de réception la saisie automatique d'un paquet de fichiers reliés entre eux.

7. Procédé de transmission et / ou réception de données pour ordinateurs personnels, selon l'une ou plusieurs des revendications précédentes, caractérisé en ce que la page de configuration contient aussi de l'information qui permet au terminal de réception une saisie automatique de nouvelles versions du software pour la réception.

8. Procédé de transmission et / ou réception de données pour ordinateurs personnels, selon l'une ou plusieurs des revendications précédentes, caractérisé en ce que chaque sous-page contient des données appartenant à un fichier unique, même dans le cas où un dossier contient quelques fichiers, de sorte que le titre de la sous-page a une longueur fixée.

9. Procédé de transmission et / ou réception de données pour ordinateurs personnels, selon l'une ou plusieurs des revendications précédentes, caractérisé en ce que sur la page de configuration, sur la première page de chaque groupe et sur toutes les sous-pages des dossiers contenant des fichiers, sont introduits des indicateurs de clôture de transmission.

10. Procédé de transmission et / ou réception de données pour ordinateurs personnels selon la revendication 9, caractérisé en ce que les indicateurs de la page de configuration et des premières pages des groupes sont activés un temps déterminé avant le changement prévu et désactivés après que le changement a eu lieu.

11. Procédé de transmission et / ou réception de données pour ordinateurs personnels selon la revendication 10, caractérisé en ce que sur les répertoires présentés à l'utilisateur apparaît une notification comme quoi un changement aura bientôt lieu, dès que les indicateurs concernés seront activés.

12. Procédé de transmission et / ou réception de données pour ordinateurs personnels selon la revendication 11, caractérisé en ce que, si l'utilisateur décide néanmoins de tenter une acquisition, les indicateurs présents sur les sous-pages contenues dans le fichier demandé permettent de contrôler la validité de l'acquisition même.

13. Equipement pour la transmission et / ou réception de données pour ordinateurs personnels, selon l'une ou plusieurs des revendications précédentes, au moyen de la diffusion circulaire de signaux radioélectriques réalisés en format télétexte, dans lesquels les données sont rassemblées en fichiers et groupes et transmises selon un procédé de transmission télésoftware, cet équipement comprenant une pluralité d'ordinateurs personnels connectés ensemble et à un système de génération de signaux télétexte, à un équipement de mémoire de masse et à un équipement de réception pour la vérification de la transmission, caractérisé en ce qu'un programme principal tournant sur ordinateurs personnels est envisagé et prévoit:
- la compilation de la page de configuration,
- la transformation de tous les fichiers appartenant à un groupe de données en pages télésoftware,
- la composition de la première page, contenant le titre du fichier du groupe,
- le transfert de toutes les pages telesoftware composées dans le système de génération télétexte, et
- le contrôle de la réception comparant les fichiers reçus avec les originaux.

14. Equipement pour la réception de données pour ordinateurs personnels, selon l'une ou plusieurs des revendications précédentes, où les données sont transmises au moyen de la diffusion circulaire de signaux radioélectriques réalisés en format télétexte, dans lesquels les données sont rassemblées en fichiers et groupes et transmises selon un procédé de transmission télésoftware, cet équipement comprenant un récepteur de signaux de télévision, un décodeur de signaux télétexte et un ou plusieurs ordinateurs personnels, caractérisé en ce que, un programme pour la saisie de l'information contenue dans la page de configuration est prévu et conséquemment construit et, si c'est le cas, visualise sur l'écran un tableau général des fichiers transmis.
